# EUROPEAN PATENT APPLICATION

(11) **EP 4 046 838 A1**
(43) Date of publication of application: **24.08.2022**
(21) Application number: 22153501.6
(22) Date of filing: 26.01.2022
(51) Int. Cl.: B60J 3/02, B60J 3/04, B60J 3/06, G06V 20/59, G06V 40/16, G06V 40/18, G06T 7/10

(54) **A SYSTEM AND METHOD FOR SHADOW ESTIMATION IN AN AUTOMATIC SUNVISOR OF A VEHICLE**

(30) Priority: 22.02.2021 US 202117180988
(71) Applicant: Robert Bosch GmbH, 70442 Stuttgart (DE)
(72) Inventor: Wisely Babu, Benzun Pious, San Jose, CA, 95131 (US); Huang, Xinyu, Cupertino, CA, 95014 (US); Ren, Liu, Saratoga, CA, 95070 (US); Zink, Jason, Milford, Michigan, 48380 (US)

(57) **Abstract**

A system of a virtual visor includes one or more sensors configured to receive input data including images, wherein the one or more sensors includes at least a camera utilized in the virtual visor, a processor in communication with the one or more sensors. The processor is programmed to create a training dataset utilizing at least the input data, utilizing the training dataset, create a classification associated with a shadow mask region and a first face region associated with a first face, segment the shadow mask region and the first face region from the training data set, and output a shadow representation via the virtual visor and utilizing the shadow mask region, the first face region, and a second face region associated with a second face.

## Description

### TECHNICAL FIELD

The present disclosure relates to an intelligent visor, such as one utilized in a vehicle, that is capable of generating shadows to block out light (e.g., from the sun).

### BACKGROUND

Shadows cast on a subject's face could be generated by many surrounding objects that lie between light sources and the face. For instance, in a driving scenario, shadows on a driver's face could be cast by distant objects such as buildings, trees, and clouds. Shadows also could be cast by adjacent objects such as a hat brim, rear view mirror, and roof of a vehicle.

Bosch virtual visor is an advanced automobile sun visor that adaptively casts shadows based on the location of the sun and the driver's face inside the vehicle. The shadows can be cast by using a semitransparent LCD panel that is electronically controlled. The basic idea is to dynamically find and make a subset of blocks on the virtual visor opaque so that this subset of blocks can cast a shadow on the eye region of the driver. The human driver is still able to see through the remaining blocks of the virtual visor that are transparent. Therefore, it is important to estimate and monitor the shadows cast by the opaque visor blocks on the driver's face in order to build a close-loop intelligent system.

### SUMMARY

According to one embodiment, a system of a virtual visor includes one or more sensors configured to receive input data including images, wherein the one or more sensors includes at least a camera utilized in the virtual visor, a processor in communication with the one or more sensors. The processor is programmed to create a training dataset utilizing at least the input data, utilizing the training dataset, create a classification associated with a shadow mask region and a first face region associated with a first face, segment the shadow mask region and the first face region from the training data set, and output a shadow representation via the virtual visor and utilizing the shadow mask region, the first face region, and a second face region associated with a second face.

According to one embodiment, a system of a virtual visor, comprising a processor in communication with one or more sensors and programmed to receive input data containing one or more images from the one or more sensors; create a training dataset utilizing at least the one or more images; utilizing the training dataset, classify a portion of the one or more images as a shadow mask region and a first face region associated with a first face; segment the shadow mask region and the first face region from the one or more images, wherein the segment of the shadow mask region includes a pre-specified object shadow; and output a three-dimensional shadow representation utilizing the shadow mask region, the first face region, and a second face region associated with a second face.

According to one embodiment, a system of a virtual visor includes a processor in communication with one or more sensors and programmed to receive input data containing one or more images from the one or more sensors, classify a portion of the one or more images as a shadow mask region and a first face region associated with a first face, segment the shadow mask region and the first face region from the one or more images, and output a three-dimensional shadow representation via the virtual visor utilizing at least to the shadow mask region and the first face region.

### BRIEF DESCRIPTION OF THE DRAWINGS

FIG. 1 illustrates an exemplary embodiment of a vehicle mounted virtual visor system.
FIGs. 2A and 2B illustrate simplified block diagrams showing exemplary LCD panel modules which may form at least part of the LCD screen of the virtual visor.
FIG. 3 illustrates one embodiment of the LCD screen which is formed by a row of four discrete LCD panel modules.
FIG. 4 illustrates one embodiment of an LCD panel module that has an information section.
FIG. 5 illustrates one embodiment of the virtual visor system in which the screen includes an n × m array of discrete LCD panel modules.
FIGS. 6A and 6B show exemplary front views of a driver taken by a camera.
FIG. 7A-7C illustrate the projection of illumination patterns onto the face of the driver.
FIG. 8A illustrates an example of a shadow mask onto a face that is utilized for a training image.
FIG. 8B illustrates an example of a shadow mask region of a training image.
FIG. 9 illustrates an exemplary flow chart for a learning-based framework for casting shadows on various faces.
FIG. 10 illustrates a flow chart of a system utilizing shadow estimation methods for 3D point clouds of shadows.

### DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles of the disclosure as would normally occur to one skilled in the art which this disclosure pertains.

Different from existing shadow estimation methods that treat the shadows cast by different objects as a same class, however, the illustrative embodiments below are designed to estimate shadows on a subject's face cast only by a pre-specified external object (e.g., the opaque blocks on the Bosch virtual visor). Notice that, although the object is pre-specified, its size, location, and orientation could be unknown and vary in real time. The proposed method ignores the shadows cast by any other objects or treats them as other classes. As a result, the proposed method is able to distinguish between shadows cast by a pre-specified object (e.g., a virtual visor) and by any other objects (e.g., surrounding vehicle, vehicle components other than the virtual visor, etc.). Comparing with existing shadow estimation methods that output 2D shadow masks or 2D bounding boxes, the proposed method outputs both 2D shadow masks and 3D point clouds of the shadows.

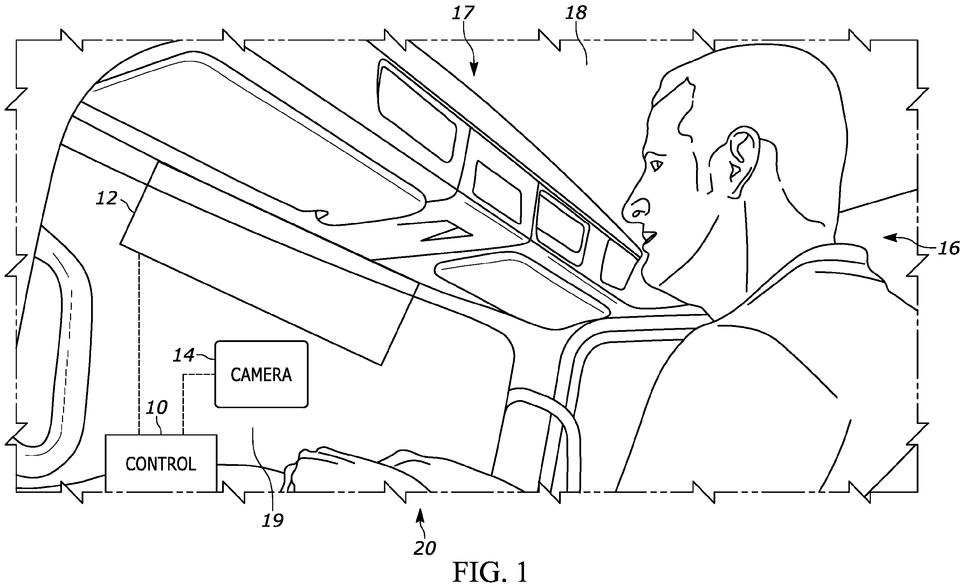

With reference to FIG. 1, an exemplary embodiment of a vehicle mounted virtual visor system 20 is described. In one embodiment, FIG. 1 shows a partial view of a cabin 17 and windshield 19 of a vehicle 18 in which the virtual visor system 20 is installed. The vehicle 18 may be a passenger vehicle, a commercial vehicle, an off-highway vehicle, a recreational vehicle, or any other suitable vehicle. The virtual visor system 20 at least includes a liquid crystal display (LCD) screen 12, which is mounted, attached or otherwise integrated with the vehicle 18 so as to cover and/or obstruct a portion of the windshield 19 or other window of the vehicle 18. The virtual visor system 20 is configured to detect changes in an illumination level within the cabin 17 of the vehicle 18. The virtual visor system 20 is configured to automatically adjust an optical property of one or more pixels of the LCD screen 12 so as to prevent high intensity light sources from disrupting the view of a driver 16 or other passenger residing in the cabin 17. In this way, the virtual visor system 20 may improve the usage of the vehicle by minimizing disruption of the view of the driver. It will be appreciated however, that the virtual visor system may also be used in settings other than a vehicle, such as a room of a building (e.g., an office environment, other motor vehicles, etc.).

In at least some embodiments, the LCD screen 12 is mounted or otherwise attached to a surface within the cabin 17 of the vehicle 18, in the field of view of the driver 16 or other passenger. Particularly, in some embodiments, the LCD screen 12 (or any type of screen, such as OLED, etc.) is mounted to the vehicle 18 so as to be in the line of sight of the driver 16 sitting in the driver's seat (e.g., or passenger seat) and looking through the windshield 19. For example, in the case of a left-hand drive vehicle, the LCD screen 12 may be mounted to the roof adjacent to the windshield 19 so as to cover and/or obstruct at least a portion of an upper-left (as viewed from within the cabin 17) region of the windshield 19. Conversely, in the case of a right-hand drive vehicle, the LCD screen 12 may be mounted to the roof adjacent to the windshield 19 so as to cover and/or obstruct at least a portion of an upper-right (as viewed from within the cabin 17) region of the windshield 19. The LCD screen 12 may be proportioned, mounted and arranged to cover and/or obstruct any region or regions of the windshield 19, as well as regions of other windows of the vehicle 18. As further examples, the LCD screen 12 may be mounted to any of the pillars of the vehicle 18 adjacent to the windshield 19 or other window, mounted to the dash, or mounted directly to the windshield 19 other window itself in order to cover different regions of the windshield 19 or other windows of the vehicle 18. In some embodiments, the LCD screen 12 may by hingedly or pivotally mounted to an interior surface of the vehicle 18 such that its orientation can be manually adjusted. Alternatively, in some embodiments, the LCD screen 12 is integrated within the glass of windshield 19 or other window of the vehicle.

The virtual visor system 20 further includes an illumination sensor, such as a camera 14. The camera 14 or other illumination sensor is configured to detect an illumination level of at least one location of interest within the cabin 17 of the vehicle 18. Particularly, in at least one embodiment, the camera 14 is mounted in the vehicle 18 at a location which has a clear view of the face of the driver 16 so as to detect an illumination level on the face of the driver 16. In one embodiment, the camera 14 is mounted to or otherwise integrated with the left or right "A" pillar of the vehicle 18. In another embodiment, the camera 14 is mounted to or otherwise integrated with the dash or steering wheel. In a further embodiment, the camera 14 is mounted to the interior side of the roof of the vehicle 18, adjacent to the top of the windshield 19. The camera 14 is configured to continuously or periodically capture images of the face of the driver 16 and output the captured image frames.

The virtual visor system 20 further includes a controller 10, which is operably connected to the LCD screen 12 and to the camera 14 or other illumination sensor. The controller 10 generally comprises at least one processor and at least one associated memory having program instructions stored thereon, which are executed by the at least one processor to achieve the described functionalities. It will be recognized by those of ordinary skill in the art that a "controller" or "processor" includes any hardware system, hardware mechanism or hardware component that processes data, signals, or other information. The controller 10 may include a system with a central processing unit, multiple processing units, or dedicated circuitry for achieving specific functionality.

The LCD screen 12 has a plurality of independently operable LCD pixels and/or LCD shutters arranged in a grid formation. Each pixel is configured to be selectively operated by the controller 10 in one of at least two optical states: (1) an opaque state, in which the respective pixel blocks light from passing through a respective area of the LCD screen 12 and (2) a transparent state, in which the respective pixel allows light to pass through the respective area of the LCD screen 12. It will be appreciated, however, that any number of intermediate optical states may also be possible. Furthermore, the opaque state and the transparent state do not necessarily indicate a 100% opaque characteristic and a 100% transparent characteristic, respectively. Instead, the opaque state is simply one which blocks more light from passing through the respective area than does the transparent state. It will be appreciated that the LCD screen 12 may instead utilize technology other the LCD pixels and a shutter screen may utilize any type of panel having shutter pixels that are electrically, magnetically, and/or mechanically controllable to adjust an optical transparency thereof.

The controller 10 is configured to receive a sensor signal from the illumination sensor. More particularly, in at least one embodiment, the controller 10 is configured to receive image frames from the camera 14. Based on the sensor signal and/or the image frames, the controller 10 is configured to determine the illumination level of at least one location with within the cabin 17 of the vehicle, particularly, the illumination level on the face of the driver 16. Depending on the determined illumination level, the controller 10 is configured to selectively operate each pixel of the LCD screen 12 in either the opaque state or the transparent state (or a selected intermediate optical state

In at least one embodiment, the controller 10 is operably connected to one or more row/column driver circuits (not shown), via which the controller 10 controls the optical state of each individual pixel of the LCD screen 12. The row/column driver circuits may comprise any suitable arrangement of multiplexers, transistors, amplifiers, capacitors, etc. configured to control the optical state of each individual pixel of the LCD screen 12 in response to control signals provided by the controller 10. In some embodiments, portions of the row/column driver circuits may be integrated with the LCD screen 12 and the pixels thereof. In some embodiments, portions of the row/column driver circuits may be integrated with the controller 10.

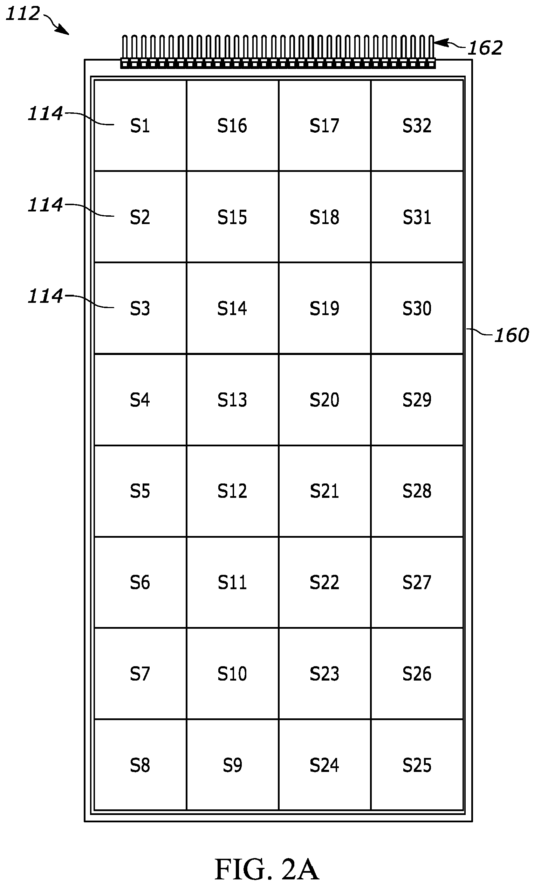

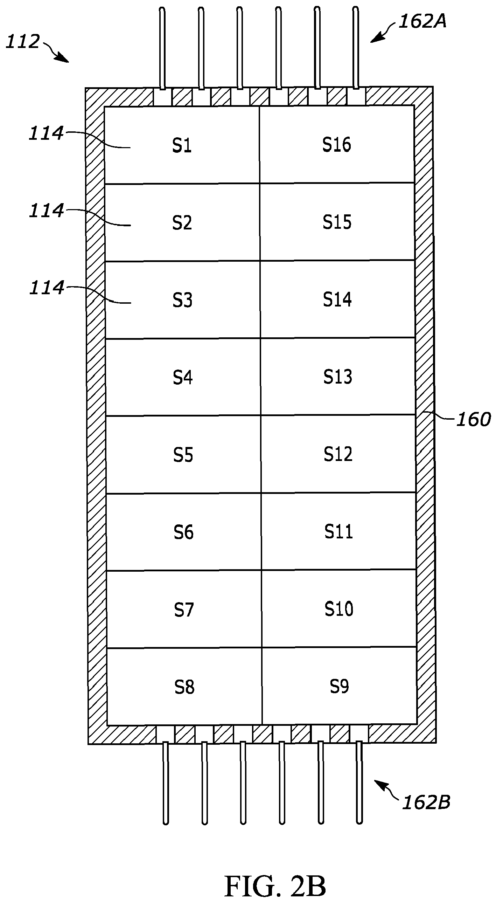

FIG. 2 shows an LCD panel 112 which, in one embodiment, forms at least part of the LCD screen 12. The LCD panel 112 comprises an array of pixels 114 arranged in a grid formation. Particularly, in the embodiment shown, the LCD panel 112 comprises thirty-two pixels 114 (S1-S32) arranged in four columns and eight rows (i.e., a 4×8 grid formation). However, it will be appreciated that the LCD panel 112 may include any number of pixels arranged in any suitable number of rows and columns. Additionally, the pixels can be arranged in non-rectangular and/or irregular formations having pixels of various shapes and sizes. In at least one embodiment, the LCD panel 112 includes a bezel 160 configured to surround and/or contain the array of pixels 114 (S1-S32) and to secure and/or hold array of pixels 114 (S1-S32) together. It will be appreciated that the LCD panel 112 may instead utilize technology other the LCD pixels and a shutter panel module may utilize any type of panel having shutter pixels that are electrically, magnetically, and/or mechanically controllable to adjust an optical transparency thereof.

The LCD panel 112 includes one or more interfaces comprised of links or connections 162 configured to connect the controller 10 and/or the row/column driver circuits to the individual pixels 114 (S1-S32). The controller 10 and/or the row/column driver circuits are configured to provide appropriated voltages, currents, data, and/or other signals to the LCD panel 112 via the connections 162 to operate the pixels 114 (S1-S32) and control the optical states thereof (i.e., control whether each pixel is in the opaque state or the transparent state, discussed above). In some embodiments, certain data or other signals are transmitted back to the controller 10 from the pixels 114 (S1-S32) via the connections 162.

In the embodiment of FIG. 2A, the connections 162 are arranged at the top portion of the bezel 160, but such connections 162 may be arranged on the LCD panel 112 in any manner. Particularly, FIG. 2B shows an alternative embodiment in which the LCD panel 112 comprises sixteen pixels 114 (S1-S16) arranged in two columns and eight rows (i.e., a 2×8 grid formation). In this embodiment, of FIG. 2B, connections 162A are arranged at the top portion of the bezel 160 and connections 162B are arranged at the bottom portion of the bezel 160. The connections 162A may, for example, carry control signals for the half of the pixels 114 (e.g., S1-S8) and the connections 162B may, for example, carry control signals for the other half of the pixels 114 (e.g., S9-S16).

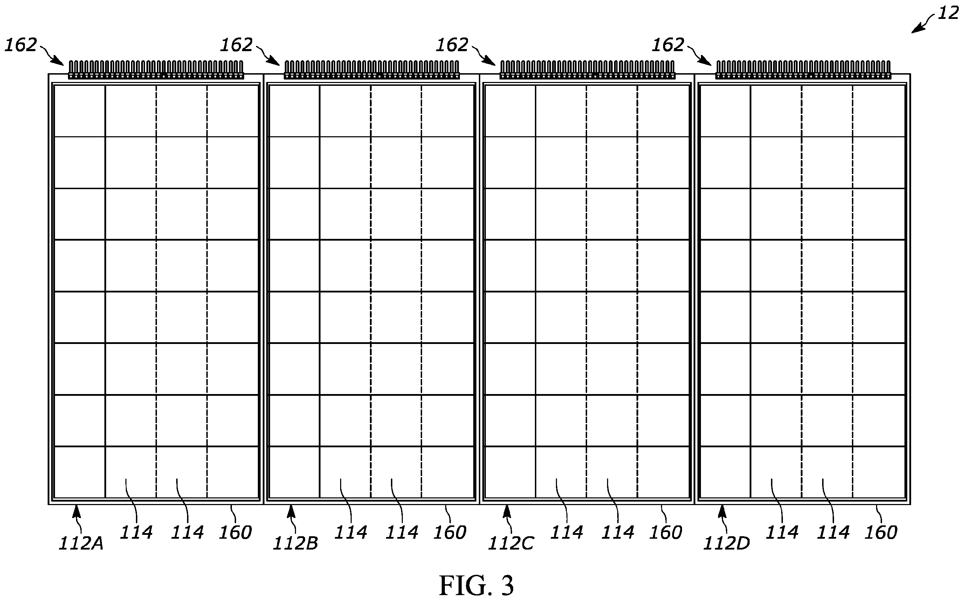

If desired, a wider or a larger LCD screen 12 may be formed in a modular manner using a plurality of discrete LCD panels 112, each having an array of pixels 114, a corresponding bezel 160 that contains the pixels, and corresponding connections 162. Particularly, FIG. 3 shows one embodiment of the LCD screen 12 which is formed by a row of four discrete LCD panels 112A-D, each having an array of pixels 114, a corresponding bezel 160 that contains the pixels, and corresponding connections 162. Each LCD panel 112A-D is operably connected to the common controller 10 via the respective connections 162. In the illustrated embodiment, at least some of the discrete LCD panels 112A-D are physically connected to one another via the respective bezels 160 and/or physically abut one another. However, in some embodiments, the LCD screen 12 may be comprised by discrete LCD panels 112 which are spaced apart from one another within the vehicle 18 and attached to the vehicle at any arbitrary locations. In one embodiment, each LCD panel 112 is individually driven with a predetermined voltage and/or voltage range, such as a voltage between 0 and 5 Volts.

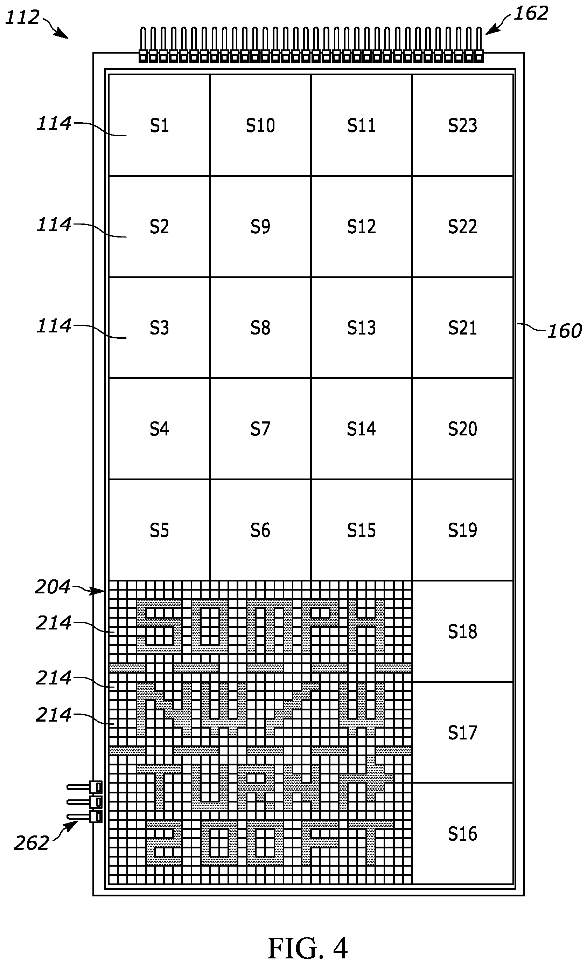

FIG. 4 shows one embodiment of an LCD panel 112 that has an information section 204. Particularly, in some embodiments, in addition to operating to prevent high intensity light sources from disrupting the view of a driver 16, one or more of the LCD panels 112 may be configured to display information via an information section 204. The information section 204 has a plurality of independently operable LCD pixels 214 arranged in a grid formation, which are essentially similar to the pixels 114 of the LCD panels 112 and are similarly contained by the bezel 160. Much like the pixels 114, in at least one embodiment, each pixel 214 is configured to be selectively operated by the controller 10 in one of at least two optical states: (1) an opaque state, in which the respective pixel blocks light from passing through a respective area of the LCD screen 12 and (2) a transparent state, in which the respective pixel allows light to pass through the respective area of the LCD screen 12. However, in some embodiments, the pixels 214 may operate differently and may have a variety of semi-transparent optical states and/or colored optical states. In at least one embodiment, the pixels 214 are smaller than the pixels 114 and the information section 204 has a greater pixel density than that of the rest of the LCD panel 112.

The controller 10 is configured to operate the pixels 214 of the information section 204 to display information to the driver 16. In one embodiment, the illustrated LCD panel 112 having the information section 204 may replace, for example, the leftmost LCD panel 112A of the embodiment of FIG. 3. In the illustrated embodiment, the information section 204 displays a driving speed (e.g., "50 MPH"), a driving direction (e.g., "NW/W"), and navigation information (e.g., Turn Right, 200 ft). The LCD panel 112 of the illustrated embodiment has additional connections 262 via which the controller 10 provides control signals to operate the pixels 214 of the information section 204 to display information to the driver 16. In one embodiment, the controller 10 is configured to receive the information via signals from an in-car navigation system, an in-car infotainment system, a trip computer, an speedometer, a compass, and/or any other appropriate device that senses or otherwise has access to information that is to be displayed in the information section 204.

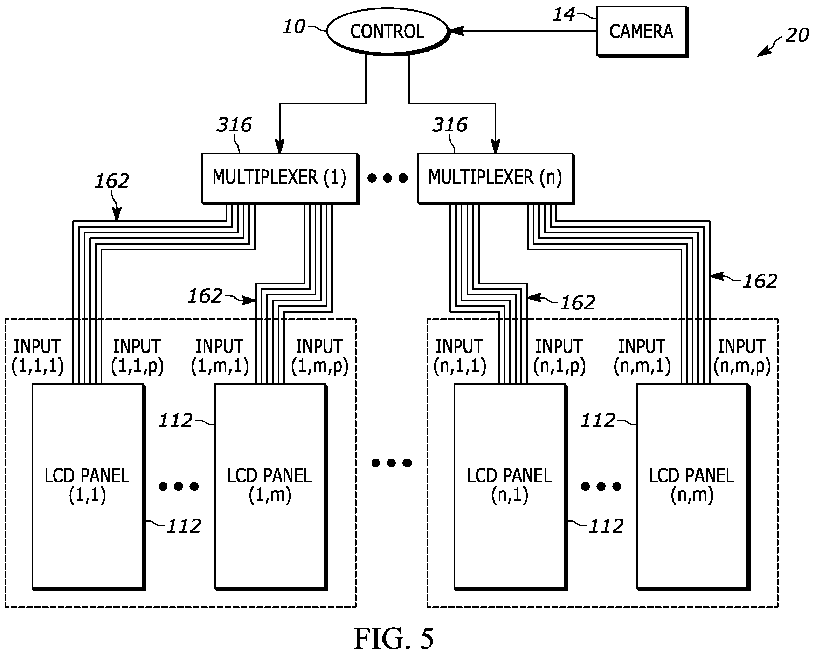

FIG. 5 illustrates one embodiment of the visor system 20 in which the LCD screen 12 comprises and n×m array of individual LCD panels 112, each having p pixels. In the illustrated embodiment, the visor system 20 includes n multiplexers 316, which route control signals from the controller 10 to each of the individual LCD panels 112, via the connections 162. The multiplexers 316 can be considered part of the row/column driver circuits discussed above. Each of the multiplexers 316 is associated with a respective column 1, 2, ... , n of the n×m array of LCD panels 112 and routes control signals from the controller 10 to the m LCD panels 112 in the respective column. For example, a 1st multiplexer 316 is configured to route input signals to the 1st column of m LCD panels 112. In particular, the 1st multiplexer 316 routes inputs (1,1,1) through (1,1, p) to the LCD panel 112 at the position (1,1) and likewise with respect to each other LCD panel 112 in the 1st column. With respect to the input signals (x, y, z) shown in FIG. 5, the first and second indices x and y identify the column and row position of the respective LCD panel 112 and the third index z identifies with particular pixel of the respective LCD panel 112. It will be appreciated that the described embodiment is merely exemplary and that a variety of different multiplexing schemes and/or row/column driving circuits can be used to route control signals from the controller 10 to the appropriate respective LCD panel 112.

Returning to FIG. 1, as discussed above, above the camera 14 is configured to capture images of the cabin 17 or, more particularly, the face of the driver 16. The image frames captured by the camera 14 are provided to the controller 10. The controller 10 is configured to process the image frames to determine an illumination level of at least one location of interest within the cabin 17 of the vehicle 18. Particularly, in at least one embodiment, the controller 10 is configured to process the image frames to determine an illumination level on a face of the driver 16 or, more particularly, on the eyes of the driver 16.

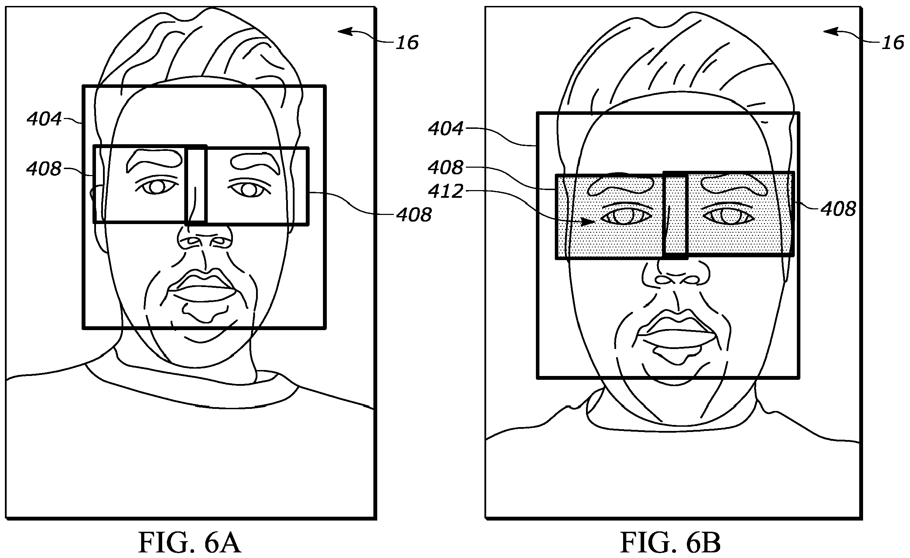

In some embodiments, the controller 10 is configured to process the image frames to determine which regions of the image frame correspond to the face of the driver 16 and which regions of the image frame correspond to the eyes of the driver, which depend on the particular location and pose of the face. FIGS. 6A and 6B show exemplary images captured by the camera 14 of the driver 16 of the vehicle 18. Regions 404 are identified by the controller 10 as corresponding to the face of the driver 16. Similarly, regions 408 are identified by the controller 10 as corresponding to the face of the driver 16. In further embodiments, the controller 10 is configured to determine a location of the face of the driver 16 within the cabin 17 and a pose/orientation of the face of the driver 16. The controller 10 is configured to determine an illumination level on the face and/or the eyes of the driver 16 based on the pixels of the image frame corresponding to the face and/or the eyes of the driver 16. In one embodiment, the illumination level is calculated as an average brightness value of the pixels of the image frame corresponding to the face and/or the eyes of the driver 16.

In some embodiments, the controller 10 is configured to determine a baseline illumination level of the at least one location of interest within the cabin 17. Particularly, in at least one embodiment, the controller 10 is configured to determine a baseline illumination level on the face of the driver 16 or, more particularly, determine a baseline illumination level on the eyes of the driver 16. The controller 10 is configured to determine a change in the illumination level by comparing the illumination level in each image frame with the determined baseline illumination level, in order to determine whether each pixel of the LCD screen 12 is to be operated in the opaque state or the transparent state. It will be appreciated that the baseline illumination level and the detected changes will vary depending on characteristics of the driver 16, such as skin color, eye color, facial hair, facial features, and so forth, as well as what the driver 16 is wearing, such as, sun glasses, eye glasses, hats, scarfs, or other light obstructing items. Additionally, it will be appreciated that the detected changes in the illumination level may be a result of a changing in the lighting environment or a change in optical state of one or more of the pixels of the LCD screen 12.

The controller 10 is configured to operate at least one pixel of the LCD screen 12 in the opaque state in response to the illumination level and/or the change in the illumination level of the at least one location of interest within the cabin 17 exceeding a predetermined threshold. In at least one embodiment, the controller 10 is configured to operate at least one pixel of the LCD screen 12 in the opaque state in response to the illumination level and/or the change in the illumination level on the face of the driver 16 exceeding the predetermined threshold or, more particularly, in response to the illumination level and/or the change in the illumination level on the eyes of the driver 16 exceeding the predetermined threshold.

The controller 10 is configured to select the at least one pixel of the LCD screen 12 to be operated in the opaque state so as to block light shining on the at least one location of interest within the cabin 17. Particularly, in at least one embodiment, the controller 10 is configured to select at least one pixel of the LCD screen 12 to be operated in the opaque state so as to block light shining on the face of the driver, or more particularly, on the eyes of the driver 16. In this way, the controller 10 is configured to operate the pixels of the LCD screen 12 to reduce the illumination level at the at least one location of interest within the cabin 17, such as the face and/or the eyes of the driver 16. FIG. 6B shows a shadow 412 cast on the eyes of the driver 16 by one or more pixels of the LCD screen 12 being operated in the opaque state.

In some embodiments, the controller 10 is configured to select at least one pixel to be operated in the opaque state based on a projection model that includes a mapping of the plurality of pixels to corresponding locations on the face of the driver 16. Particularly, the controller 10 is configured to store a mapping between each individual pixel of the LCD screen 12 and a corresponding location in the cabin 17, or more particularly, a corresponding location on the face of the driver 16 at which the respective pixel casts a shadow when operated in the opaque mode. It will be appreciated that the location at which a pixel casts a shadow when operated in the opaque mode is dependent on the lighting environment and, in particular, a location of any high intensity light sources, such as the sun, which shines through the windshield 19 onto the face of the driver 16. In one embodiment, the controller 10 is configured to periodically and/or continuously update the mapping between each individual pixel of the LCD screen 12 and the corresponding location on the face of the driver 16.

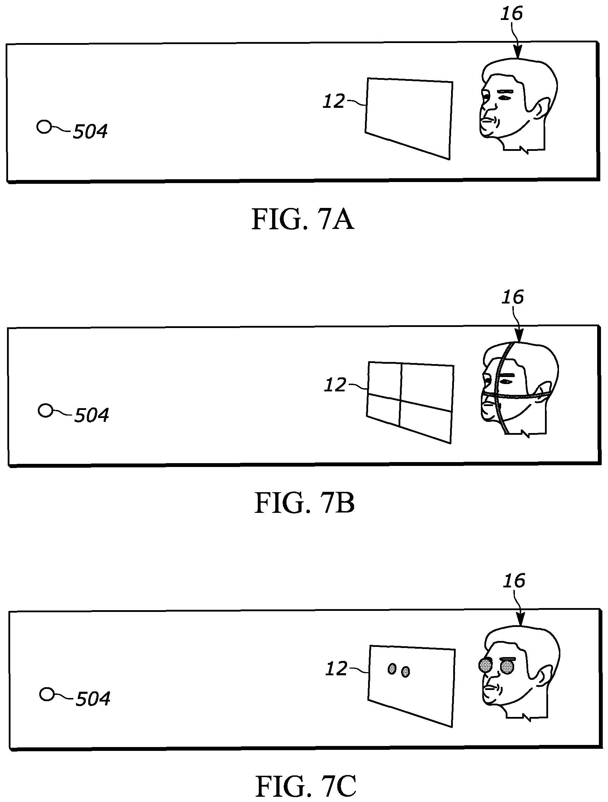

In some embodiments, the controller 10 is configured to update the mapping by operating a subset of pixels of the LCD screen 12 in the opaque state to project an illumination pattern onto the face of the driver 16. The controller 10 is configured to process image frames received from the camera 14 to detect the illumination pattern on the face of the driver 16 and determine the mapping of the pixels to corresponding locations on the face of the driver 16 based on the detected location of the illumination pattern on the face of the driver 16. FIGS. 7A-7C illustrate the projection of a predetermined illumination pattern onto the face of the driver 16. A high intensity light source 504 is shines light through the LCD screen 12 onto the face of the driver 16. In FIG. 7A, all of the pixels of the LCD screen 12 are operated in the transparent mode and, thus, the light from the high intensity light source 504 shines onto the face of the driver 16. In FIG. 7B, the controller 10 operates a predetermined subset of the pixels of the LCD screen 12 in the opaque mode to cast a shadow that forms a predetermined illumination pattern corresponding to the subset of pixels operated in the opaque mode (e.g., a cross pattern, as illustrated). Based on the location of the detected illumination pattern on the face of the driver 16, the controller 10 is configured to update and/or determine the mapping between each individual pixel of the LCD screen 12 and the corresponding location on the face of the driver 16.

It will be appreciated that the subset of pixels operated in the opaque mode can correspond to any pattern, including the pattern that is already being used to block the high intensity light source 504 from shining on the eyes of the driver 16. FIG. 7C shows the pixels of the LCD screen 12 operated to cast two circular shadows on to the eyes of the driver, thereby blocking the high intensity light source 504 from shining on the eyes of the driver 16. The controller 10 is configured update the mapping in real-time based on movements of the two circular shadows on the face of the driver 16. In this way, the projection of the shadow/illumination pattern and detection of the shadow/illumination pattern on the face of the driver via the camera form a real-time feedback loop which is used to align the shadows with the eyes of the driver 16.

In one embodiment, the controller 10 is configured to periodically or continuously update the mapping between each individual pixel of the LCD screen 12 and the corresponding location on the face of the driver 16 based on other methods. In one embodiment, the controller 10 is configured to update the mapping based on changes in the location and pose of the face of the driver 16, as detected by the controller 10 based on the image frames. In one embodiment, the controller 10 is configured to update the mapping based on changes in the direction of travel of the vehicle 18 by calculating a corresponding change in relative position of the high intensity light source 504.

In some embodiments, the controller 10 is configured to select pixels of the LCD screen 12 to be operated in the transparent or opaque state so as to achieve other purposes aside from blocking high intensity light sources from shining on the face and/or eyes of the driver 16. For example, in one embodiment, the controller 10 is configured to select at least one pixel of the LCD screen 12 to be operated in the opaque state so as to block light from shining on an electronic device, such as a smart phone or in-car navigation/infotainment system, thereby improving the readability of a screen of the electronic device. As another example, in one embodiment, the controller 10 is configured to select at least one pixel of the LCD screen 12 to be operated in the transparent or opaque state so as to illuminate a particular object in an otherwise dark setting, such as letting light shine on a book while a person is reading, while the rest of the area is shielded from the light source.

The system may be utilized and distinct from existing shadow estimation methods that treat the shadows cast by different objects as the same class, regardless if it is from the virtual visor or not. Instead, the proposed method may be designed to estimate shadows on a subject's face cast only by a pre-specified external object (e.g., the opaque blocks on the Bosch virtual visor). Notice that, although the object is pre-specified, its size, location, and orientation could be unknown and vary in real time. The proposed method ignores the shadows cast by any other objects or treats them as other classes. As a result, the proposed method is able to distinguish between shadows cast by a pre-specified object and by any other objects.

Comparing with existing shadow estimation methods that output 2D shadow masks or 2D bounding boxes, the proposed method outputs both 2D shadow masks and 3D point clouds of the shadows.

In order to estimate shadows cast by a pre-specified object, the system may need to build a training dataset and define the annotation rules to generate ground truth shadow masks. Using the virtual visor as an example, the annotation rules could be:
(1) The shadow on a face cast by opaque blocks of virtual visor should be annotated as one class;
(2) The face region that is not covered by shadow in rule 1 should be annotated as a class;
(3) The non-face region (no matter covered by shadow or not) should be annotated as a class.
(4) (optional) The shadow on a face that is not the shadow in rule 1 should be annotated as one or multiple classes.

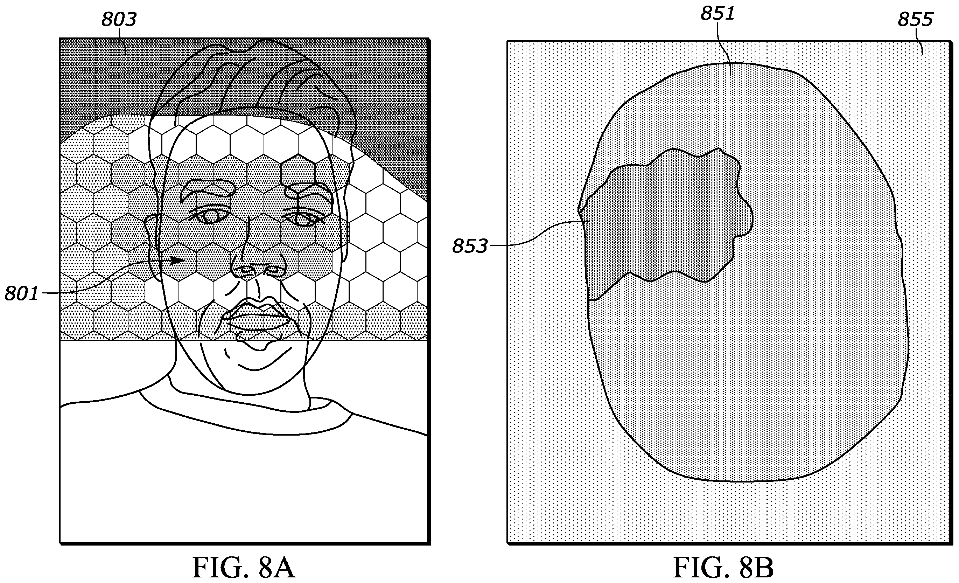

The example of training image and its shadow mask is illustrated in the following FIGs. 8A and 8B. As shown in FIG. 8A, the system may include shadow casts 801 that are output by the blocks (e.g., opaque blocks) of the virtual visor. Of course, other shadow casts 803 may be output from objects other than the visor. The first area 853 is the shadow region annotated by rule 1 (shadow on a face cast by opaque blocks of the virtual visor), the second area 851 is the face region annotated by rule 2 (face region is not covered by shadow), and the third area 855 is the non-face region annotated by rule 3 (non-face region no matter if it is covered by a shadow or not).

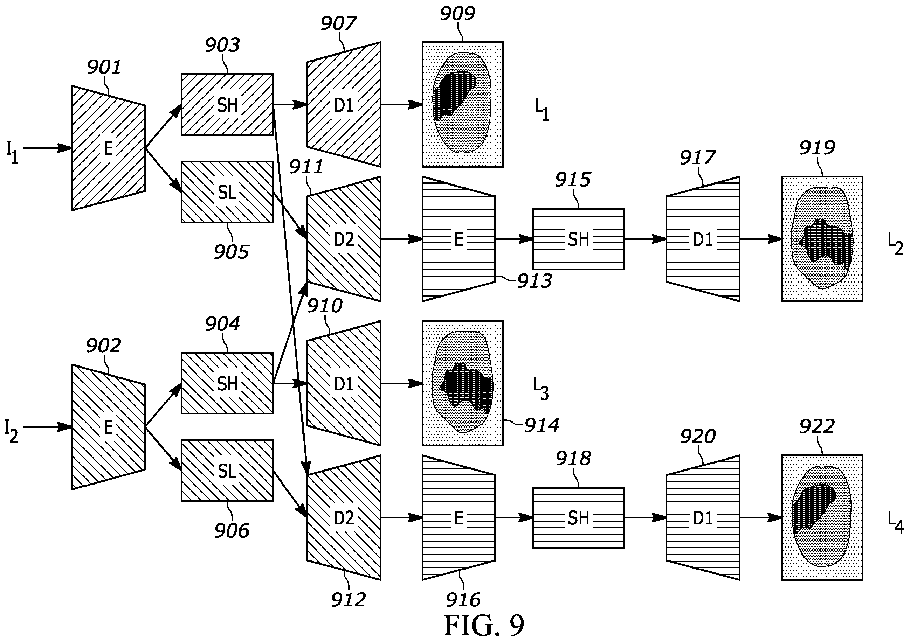

FIG. 9 shows an exemplary flow chart for a learning-based framework for casting shadows on various faces. The framework of a learning based method is illustrated in the following FIG. 9. In order to distinguish between shadow cast by a pre-specified object and by any other objects, it is necessary to extract features for the shadow cast by the pre-specified object. Thus, the shadow cast by a pre-specified object may include the shadow cast from the virtual visor, while the other shadow cast may include shadow from random objects that are not the virtual visor, such as various parts of the automobile or surrounding vehicle environment. More importantly, the extracted features should be disentangled from other face variations including pose, lighting conditions, and other shadows.

As shown in FIG. 9, *E* 901, 902, 913, 916 may be representative of an encoder configured to extract shared features from the input data, *SH* 903, 904, 915, 918 may show a shadow network branch that is used to extract features for shadows cast by the pre-specified object. *SL* 905, 906, may indicate a network branch that is used to extract features for other face variations (e.g, various attributes from multiple faces / people) , *D1* 907, 910 may be the decoder that converts features from the last layer of *SH* to 2D shadow masks, *D2* 911, 912 is the decoder to synthesize novel face images using shadow features from *SH* and features from *SL.*

*I*1 and *I*2 could be two input face images that contain shadows cast by the pre-specified object at different locations. *E, SH*, and *D1* together is the encoder-decoder network that is used to segment the input image and output the shadow mask. By comparing the classification results with ground truth annotations for *I*1 and *I*2, the system may obtain the losses *L*1 909 and *L*3 914. After combining *SH* and *SL* features from different input faces, the system may utilize a decoder, such as *D2*, to synthesize novel face images in which shadows are transferred from one face to another face. These synthesized faces are passed through *E, SH*, and *D1* again to generate corresponding shadow masks and then produce the losses *L*2 919 and *L*4 922. The total loss is the summation of *L*1, *L*2, *L*3, and *L*4*.* Thus, the summation may identify the loss of each different face input associated with novel face images.

Once the system estimates the shadow masks from the previous stage, the system may back-project the shadow pixels into 3D space according to the camera projection matrix. The rays generated by the shadow pixels intersect with the 3D face point cloud and the nearest point for each ray may be chosen as the intersection point. This set of intersection points may provide us the shadow reconstruction in a 3D space. The 3D face point cloud could be generated by various methods, such as a PnP algorithm based on the face alignment, depth estimation from stereo cameras or other depth sensors, and even approximated by a cylinder or ellipsoid.

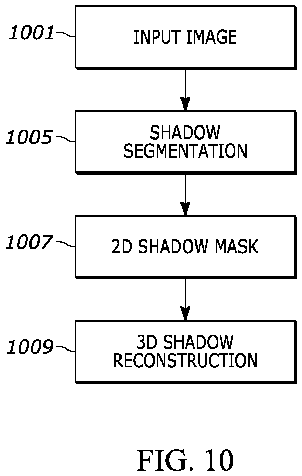

FIG. 10 illustrates a flow chart of a system utilizing shadow estimation methods for 3D point clouds of shadows. The flow-chart is a high-level overview of the details described above, such as with respect to FIG. 9. The system may be distinct from existing shadow estimation methods that treat the shadows cast by different objects as the same class, regardless if it is from the virtual visor or not. Instead, the proposed method may be designed to estimate shadows on a subject's face cast only by a pre-specified external object (e.g., the opaque blocks on the Bosch virtual visor). Notice that, although the object is pre-specified, its size, location, and orientation could be unknown and vary in real time. The proposed method ignores the shadows cast by any other objects or treats them as other classes. As a result, the proposed method is able to distinguish between shadows cast by a pre-specified object and by any other objects. At step 1001, the system may receive an input image. The input image may contain multiple shadow casts by multiple objects. Thus, aside from the visor, vehicle components or objects surrounding the vehicle (e.g., trees, signs, buildings, etc.) may cast other types of shadows. In optional step 1003, the system may receive other input from other sensors aside from the image input. For example, the system may receive a depth map, pattern of opaque blocks on the virtual visor, head pose, etc. At step 1005, the system may conduct a shadow segmentation to define the various shadows from the pre-specified objects and the virtual visor. At step 1007, the system may output a 2D shadow mask utilizing the various inputs and shadow segmentation from the pre-specified objects, as well as other data such as the size, location, orientation, etc. Finally at step 1009, the system may output a 3D Shadow Reconstruction via the virtual visor to be portrayed on a user.

Embodiments within the scope of the disclosure may also include non-transitory computer-readable storage media or machine-readable medium for carrying or having computer-executable instructions or data structures stored thereon. Such non-transitory computer-readable storage media or machine-readable medium may be any available media that can be accessed by a general purpose or special purpose computer. By way of example, and not limitation, such non-transitory computer-readable storage media or machine-readable medium can comprise RAM, ROM, EEPROM, CD-ROM or other optical disk storage, magnetic disk storage or other magnetic storage devices, or any other medium which can be used to carry or store desired program code means in the form of computer-executable instructions or data structures. Combinations of the above should also be included within the scope of the non-transitory computer-readable storage media or machine-readable medium.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, objects, components, and data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

## Claims

1. A system of a virtual visor, comprising:
one or more sensors configured to receive input data including images, wherein the one or more sensors includes at least a camera utilized in the virtual visor;
a processor in communication with the one or more sensors and programmed to:
create a training dataset utilizing at least the input data;
utilizing the training dataset, create a classification associated with a shadow mask region and a first face region associated with a first face;
segment the shadow mask region and the first face region from the training data set; and
output a shadow representation via the virtual visor and utilizing the shadow mask region, the first face region, and a second face region associated with a second face.

2. The system of claim 1, wherein the processor is further programmed to estimate shadow associated with the facial data associated with the images.

3. The system of claim 1, wherein the training data set includes one or more annotation rules defining classification attributes.

4. The system of claim 1, wherein the image includes at least a shadow cast associated with one or more objects.

5. The system of claim 1, wherein the training data set includes images and associated shadow mask information defining a shadow region, face region, and non-face region.

6. The system of claim 1, wherein the processor is further programmed to segment the shadow mask region and the first face region utilizing an encoder and a decoder.

7. The system of claim 1, wherein the processor is further programmed to compare a first loss and second loss, wherein the first loss is associated with a first and second input face image including shadow casts at different locations.

8. The system of claim 1, wherein the shadow mask region is a two-dimensional shadow mask and the shadow representation is three-dimensional.

9. The system of claim 1, wherein the processor is further programmed to segment a virtual visor shadow cast image and an object shadow cast image.

10. A system of a virtual visor, comprising:
a processor in communication with one or more sensors and programmed to:
receive input data containing one or more images from the one or more sensors;
create a training dataset utilizing at least the one or more images;
utilizing the training dataset, classify a portion of the one or more images as a shadow mask region and a first face region associated with a first face;
segment the shadow mask region and the first face region from the one or more images, wherein the segment of the shadow mask region includes pre-specified object shadow; and
output a three-dimensional shadow representation utilizing the shadow mask region, the first face region, and a second face region associated with a second face.

11. The system of claim 10, wherein the processor is further programmed to segment the shadow mask region and the first face region utilizing an encoder-decoder network.

12. The system of claim 10, wherein the processor is further programmed to compare classification of the training data with ground truth annotations to determine one or more losses associated with the classification.

13. The system of claim 10, wherein the processor utilizes an encoder to segment the one or more images.

14. The system of claim 10, wherein the processor is further programmed to back-project the three-dimensional shadow representation.

15. The system of claim 10, wherein the processor is further programmed to output a three-dimensional shadow representation utilizing a non-face region.

16. A system of a virtual visor, comprising:
a processor in communication with one or more sensors and programmed to:
receive input data containing one or more images from the one or more sensors;
classify a portion of the one or more images as a shadow mask region and a first face region associated with a first face;
segment the shadow mask region and the first face region from the one or more images; and
output a three-dimensional shadow representation via the virtual visor utilizing at least to the shadow mask region and the first face region.

17. The system of claim 16, wherein the processor is further programmed to disentangle features utilizing an encoder.

18. The system of claim 16, wherein the segment of the shadow mask region includes shadow associated with a pre-specified object.

19. The system of claim 18, wherein the pre-specified object includes the virtual visor.

20. The system of claim 16, wherein the segment of the shadow mask region includes shadow cast not associated with a pre-specified object.
